# EUROPÄISCHE PATENTSCHRIFT

(11) **EP 0 566 883 B1**
(45) Veröffentlichungstag und Bekanntmachung des Hinweises auf die Patenterteilung: **18.09.1996**
(21) Anmeldenummer: 93104741.9
(22) Anmeldetag: 23.03.1993
(51) Int. Cl.: C08J 7/12, B29C 49/46

(54) **Verfahren zur Herstellung von Barriereschichten für auf der inneren Oberfläche von Hohlkörpern**
Process for making barrier layers on the inner surfaces of blow-mouldings
Procédé de préparation de couches barrières sur les surfaces internes des corps-creux

(30) Priorität: 18.04.1992 DE 4212969
(43) Veröffentlichungstag der Anmeldung: 27.10.1993
(73) Patentinhaber: MESSER GRIESHEIM GMBH, D-60547 Frankfurt (DE)
(72) Erfinder: van Bonn, Rolf, W-4100 Duisburg 29 (DE); Eschwey, Manfred, Dr., W-4000 Düsseldorf 31 (DE)

(56) Entgegenhaltungen:
- EP-A- 0 266 439
- EP-A- 0 267 441
- EP-A- 0 270 776
- EP-A- 0 305 740
- DE-A- 3 535 602

## Beschreibung

Die Erfindung betrifft ein Verfahren zur Herstellung von Barriereschichten für Abmischungen aus polaren und unpolaren Stoffen auf der inneren Oberfläche von Hohlkörpern aus thermoplastischen Kunststoffen nach dem Oberbegriff des Anspruches 1.

Der Einsatz thermoplastischer Kunststoffe in der Technik findet u.a. in den Materialeigenschaften der Kunststoffe seine Grenzen. Die wahrscheinlich wichtigste dieser Grenzen ist die limitierte sperreigenschaft dieser Kunststoffe gegen Gase, Dämpfe und Lösungsmittel. Eine Möglichkeit, diese Grenzen ein Stück zu verschieben oder aufzuheben ist die Gasphasenfluorierung. Bei der Gasphasenfluorierung wird auf Polyäthylen oder anderen Polyolefinen durch kurze Einwirkung eines fluorhaltigen Behandlungsgases eine polare Grenzschicht gebildet. Ein solches Verfahren zeigt beispielsweise die DE-PS 35 11 743. Die Anwendbarkeit dieser Massenkunststoffe wird hierdurch beträchtlich erweitert. Allerdings sind die bisherigen Verfahren zum Sperrschichtaufbau, hierzu gehören u.a. Coextrusion, Einarbeitung von Sperrschichtharzen und Lackierungen, in ihrer Wirkung auf bestimmte Permeenten, d.h. Füllgüter, begrenzt.

In der Regel versagen derartige Sperrschichten mehr oder weniger deutlich, wenn man sie mit Mischungen aus unpolaren und stark polaren Stoffen in Kontakt bringt. Der Grund für dieses noch nicht vollständig aufgeklärte Phenomen ist vermutlich das Quellverhalten dieser Sperrschichtkunststoffe gegenüber solchen Lösemittelgemischen. Die polaren Anteile des Permeenten führen zur Anquellung polarer Sperrschichten, die wiederum dann auch durchlässiger für unpolare Komponenten werden. Entsprechendes gilt natürlich auch für polare Sperrschichten, die medienseitig von einer unpolaren Schicht bedeckt sind, wie z.B. bei der Coextrusion. Hierbei werden zunächst die unpolaren Außenschichten durch unpolare Lösemittel angequollen, die damit dann auch für polare Komponenten durchlässig werden. Durch diesen "Schleppeffekt" gelangen polare Lösungsmittel in den Bereich der an sich abgedeckten polaren Sperrschicht und führen auch hier zu einer deutlichen Verringerung der Sperrwirkung.

Technische Zubereitungen bestehen in der Regel aus solchen Komplexen Abmischungen von polaren und unpolaren Stoffen. Es handelt sich hierbei vor allem um Produkte der chemischen und petrochemischen Industrie, beispielsweise Kraftstoffe.

Der Erfindung liegt daher die Aufgabe zugrunde, ein Verfahren zur Herstellung von Barriereschichten auf den inneren Oberflächen von Hohlkörpern aus thermoplastischen Kunststoffen zu schaffen, welche gegenüber Abmischungen aus polaren und unpolaren Stoffen wirksam sind.

Ausgehend von dem im Oberbegriff des Anspruches 1 berücksichtigten Stand dem Technik ist diese Aufgabe erfindungsgemäß gelöst mit den im kennzeichnenden Teil des Anspruches 1 angegebenen Merkmalen.

Vorteilhafte Weiterbildungen der Erfindung sind in den Unteransprüchen angegeben.

Durch die erfindungsgemäße Maßnahme, die Gasphasenfluorierung bei Temperaturen unterhalb der Umgebungstemperatur, bevorzugt zwischen -20°C und -196°C, durchzuführen lassen sich überraschenderweise Barriereschichten auf Kunststoffoberflächen erhalten, die für Abmischungen aus polaren und unpolaren Stoffen äußerst wirksam sind. Ein typisches Beispiel für solche Abmischungen stellen moderne Ottokraftstoffe dar, die neben unpolaren Kohlenwasserstoffen (Aliphaten, Aromaten) auch sauerstoffhaltige Komponenten wie Alkohole (z.B. Methanol, Ethanol, Methyltertiärbuthyleter u.a. mehr) enthalten. In solchen Kraftstoffen kann darüber hinaus auch in wechselnden Mengen Wasser zugegen sein, welches über seine Eigenschaft als stark polares Lösungsmittel noch hinaus die negativen Effekte anderer polarer Stoffe auf die Sperrschichteigenschaften von Barrierekunststoffen noch verstärkt.

Zur Herstellung von Barriereschichten gemäß der Erfindung, die gegenüber den genannten Permeentenmischungen eine hochwirksame Sperrwirkung besitzen, wird die Behandlung mit dem fluorhaltigen Gasgemisch bei niedrigen Temperaturen des gasförmigen Mediums durchgeführt. Beispielsweise kann das fluorhaltige Behandlungsgas in einem Wärmeaustauscher auf die gewünschte Arbeitstemperatur abgekühlt werden. Diese Arbeitstemperatur sollte deutlich unter der Umgebungstemperatur liegen, bevorzugt zwischen -20°C und -196°C. Der Bereich zwischen -20°C und -100°C stellt in der Regel ein wirtschaftliches Optimum dar. -196°C wird nur in so weit als Untergrenze genannt, als dies die Siedetemperatur von flüssigem Stickstoff ist, der das bevorzugte Kältemittel ist. Es sind jedoch auch Temperaturen oberhalb -20°C bis knapp unterhalb der Raumtemperatur bereits erfindungsgemäß wirksam.

Die Durchführung des erfindungsgemäßen Verfahrens kann auch zweistufig erfolgen. Hierbei kann mit tiefkaltem, ggf. verflüssigten Stickstoff die Temperatur im Behandlungsraum soweit abgesenkt werden, daß sich nach der Dosierung des eigentlichen Behandlungsgases eine Mischtemperatur als erfindungsgemäß wirksame Arbeitstemperatur einstellt. Hierbei wird die Temperatur der Polymeroberfläche nur unwesentlich abgesenkt. Ziel all dieser Maßnahmen ist, daß das Behandlungsgas kälter ist als die Polymeroberfläche, mit der es zur Reaktion gebracht werden soll. Die Behandlungszeiten liegen im Bereich einiger Sekunden bis zu wenigen Minuten. Eine Verlängerung der Kontaktzeit ist unkritisch und bedeutet keine Einschränkung im Sinne der Erfindung. Die Zusammensetzung des Behandlungsgases entspricht den derzeit bei der Gasphasenfluorierung eingesetzten Gasmischungen, beispielsweise Stickstoff mit 0,1 bis 10 Vol% Fluor oder neben Fluor und Stickstoff noch 0,1 bis 25 Vol.% Sauerstoff.

Eine besonders vorteilhafte Ausbildung des Verfahrens stellt die Integration des erfindungsgemäßen Behandlungsschrittes in den Fertigungsprozeß dar, z.B. bei der Blasextrusion von Hohlkörpern. Hierbei erreicht man nicht nur eine Verbesserung der Sperrschichteigenschaften gegenüber Mischungen aus polaren und unpolaren Komponenten, sondern erzielt zusätzlich eine Verkürzung der Taktzeit des Fertigungsprozesses pro Formteil durch die Kühlung der Behälterinnenwand.

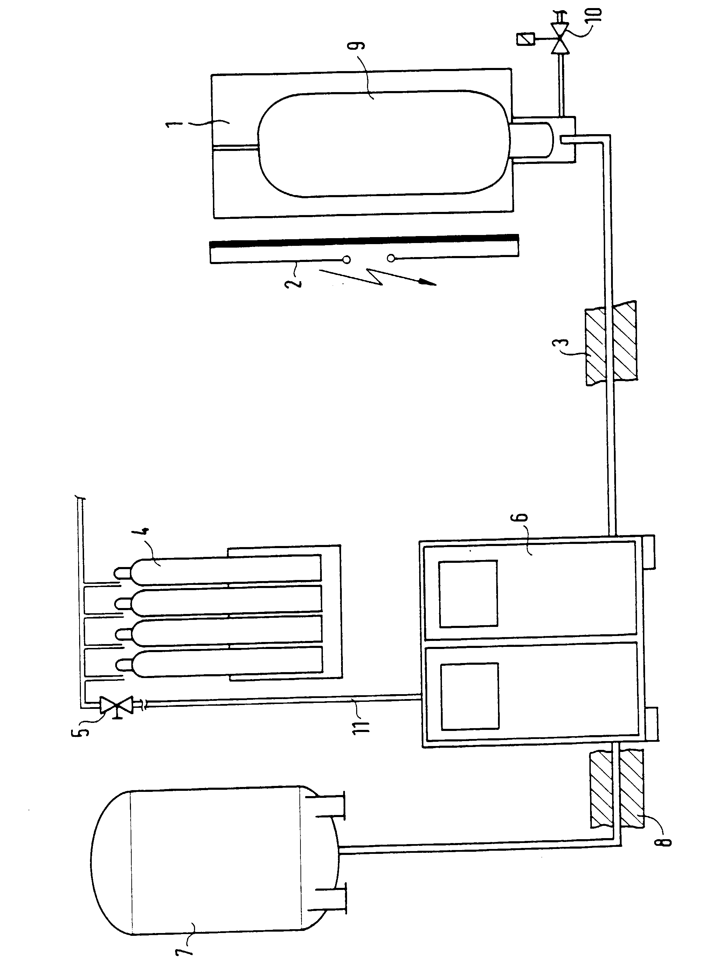

Die Zeichnung veranschaulicht ein Ausführungsbeispiel der Erfindung anhand eines Verfahrensschemas.

Dargestellt wird die Herstellung von Flaschen aus HDPE (Hostalen GM 7746 schwarz der Hoechst AG) mit einer Dichte von 0,9444 bis 0,948 g cm⁻³ und einem geometrischen Volumen von 500 ml. Die Flaschen 9 werden in der Stützform 1 hergestellt, die durch eine Heizung 2 beheizt wird. Die Flaschen 9 werden hier zunächst bei einem Innendruck von 10 bar auf eine einheitliche Wandtemperatur von 150°C bis 80°C gebracht. Anschließend wird der Druck auf ca. 2 bar abgesenkt das fluorhaltige Behandlungsgas durch die vakuumisolierte Rohrleitung 3 in die Flasche eingeführt. Das fluorhaltige Behandlungsgas gelangt aus den Gasflaschen 4 und die mit einem Absperrventil 5 versehene Leitung 11 in den Wärmeaustauscher 6. Hier wird es durch flüssigen Stickstoff auf eine Temperatur von -20°C bis -196°C abgekühlt. Der flüssige Stickstoff gelangt aus dem Speicher 7 durch die vakuumisolierte Leitung 8 ebenfalls in den Wärmeaustauscher 6.

Das fluorhaltige Behandlungsgas, welches in die Flasche 9 einströmt, kann entsprechend der gewählten Arbeitstemperatur gasförmig oder als Gas/Flüssiggemisch vorliegen. Nach Beendigung der Behandlung wird das Behandlungsgas über das Ventil 10 abgezogen.

Gemäß der Erfindung hergestellte Flaschen wurden in Anlehnung an ECE-R 34 einer Permeationsprüfung mit Methanol- und wasserhaltigen Prüfkraftstoffen unterzogen und herkömmlich fluorierten Behältern gegenübergestellt. Die Ergebnisse sind in den Tabellen 1-3 wiedergegeben:

**Tabelle 1**

| Behandlungsbedingungen: Druck: 10 bar; F₂-Konz.: 1%; Oberflächentemp.: 120°C; Kontaktzeit: 40 sec | | | | | |
|---|---|---|---|---|---|
| Masseverlust der Flaschen in Gew.%/d bei einer Temp. des Behandlungsgases von: | RT | 0°C | -20°C | -100°C | -196°C |
| Testkraftstoff (TK)* | 0,005 | 0,005 | 0,005 | 0,005 | 0,005 |
| TK + 1% Methanol | 0,2 | 0,15 | 0,1 | 0,01 | 0,008 |
| TK + 3% Methanol | 0,3 | 0,18 | 0,12 | 0,01 | 0,009 |
| TK + 15% Methanol | 0,25 | 0,15 | 0,1 | 0,01 | 0,008 |
| Super mit 1% Methanol | 0,1 | 0,08 | 0,08 | 0,007 | 0,006 |
| TK mit ca. 0,1% Wasser | 0,15 | 0,1 | 0,1 | 0,007 | 0,006 |
| Nullprobe (unbehandelt) | 0,6 | - | - | - | - |

| | | | | | |
|---|---|---|---|---|---|
| * CEC-RF 05; Füllmenge: 475 ml | | | | | |

**Tabelle 2**

| Behandlungsbedingungen: Druck: 10 bar; F₂-Konz.: 0,4%; O₂-Konz.: 2,6%; Oberflächentemp.der Flasche: 140°C; Kontaktzeit: 40 sec | | | | | |
|---|---|---|---|---|---|
| Masseverlust der Flaschen in Gew.%/d bei einer Temp. des Behandlungsgases von: | RT | 0°C | -20°C | -100°C | -196°C |
| Testkraftstoff (TK)* | 0,002 | 0,002 | 0,002 | 0,002 | - |
| TK + 1% Methanol | 0,3 | 0,15 | 0,12 | 0,01 | - |
| TK + 3% Methanol | 0,38 | 0,18 | 0,15 | 0,01 | - |
| TK + 15% Methanol | 0,28 | 0,15 | 0,11 | 0,01 | - |
| Super mit 1% Methanol | 0,1 | 0,09 | 0,08 | 0,006 | - |
| TK mit ca. 0,1% Wasser | 0,15 | 0,1 | 0,1 | 0,007 | - |
| Nullprobe | 0,6 | - | - | - | - |

| | | | | | |
|---|---|---|---|---|---|
| * CEC-RF 05; Füllmenge: 475 ml | | | | | |

**Tabelle 3**

| Behandlungsbedingungen: Vorkühlung der Flasche durch N₂; Temp.: -100°C; Kontaktzeit: 40 sec bei 2 bar; F₂-Konz.: 1%; Oberflächentemp.: 120°C; Kontaktzeit: 40 sec | | | | | |
|---|---|---|---|---|---|
| Masseverlust der Flaschen in Gew.%/d bei einer Temp. des Behandlungsgases von: | RT | 0°C | -20°C | -100°C | -196°C |
| Testkraftstoff (TK)* | 0,002 | 0,002 | 0,002 | 0,002 | - |
| TK + 1% Methanol | 0,3 | 0,15 | 0,12 | 0,01 | - |
| TK + 3% Methanol | 0,38 | 0,18 | 0,15 | 0,01 | - |
| TK + 15% Methanol | 0,28 | 0,15 | 0,11 | 0,01 | - |
| Super mit 1% Methanol | 0,1 | 0,1 | 0,08 | 0,006 | - |
| TK mit ca. 0,1% Wasser | 0,15 | 0,1 | 0,1 | 0,007 | - |
| Nullprobe | 0,6 | - | - | - | - |

| | | | | | |
|---|---|---|---|---|---|
| * CEC-RF 05; Füllmenge: 475 ml | | | | | |

Die Wirksamkeit des erfindungsgemäßen Verfahrens hinsichtlich der Verbesserung der Sperrwirkung gegenüber Abmischungen aus polaren und unpolaren Stoffen ist hieraus unmittelbar ersichtlich.

## Patentansprüche

1. Verfahren zur Herstellung von Barriereschichten für Abmischungen aus polaren und unpolaren Stoffen auf der inneren Oberfläche von Hohlkörpern aus thermoplastischen Kunststoffen, welche in einer Stützform (1) aufgeblasen und für einige Zeit der Einwirkung eines fluorhaltigen Behandlungsgases ausgesetzt werden,
dadurch gekennzeichnet,
daß die Temperatur der Oberfläche zu Beginn der Einwirkung zwischen 60°C und 250°C beträgt und die bei der Fluorierung freiwerdende Reaktionsenergie durch Kühlung des Behandlungsgases abgeführt wird.

2. Verfahren nach Anspruch 1,
dadurch gekennzeichnet,
daß das fluorhaltige Behandlungsgas mit einer Temperatur zwischen -20°C und -196°C in den Hohlkörper eintritt.

3. Verfahren nach Anspruch 1,
dadurch gekennzeichnet,
daß die Kühlung des Behandlungsgases durch Mischung mit zuvor in den Hohlkörper eingebrachtem tiefkalten Stickstoff bewirkt wird.

## Claims

1. Process for producing barrier layers for mixtures of polar and nonpolar materials on the inner surface of hollow bodies of thermoplastic polymers, which are blown in a supporting mould (1) and exposed for some time to the action of a fluorine-containing treatment gas, characterized in that the temperature of the surface at the beginning of the treatment is between 60°C and 250°C and the reaction energy liberated on fluorine action is removed by cooling the treatment gas.

2. Process according to Claim 1, characterized in that the fluorine-containing treatment gas enters the hollow body at a temperature between -20°C and -196°C.

3. Process according to Claim 1, characterized in that the cooling of the treatment gas is effected by mixing with very cold nitrogen previously introduced into the hollow body.

## Revendications

1. Procédé de préparation de couches barrières pour des mélanges de substances polaires et non polaires sur la surface interne de corps creux en matières thermoplastiques, qui sont soufflés dans un moule (1) et exposés un certain temps à l'effet d'un gaz de traitement contenant du fluor,
caractérisé en ce que,
la température de la surface au début de l'effet est comprise entre 60°C et 250°C et l'énergie de réaction libérée lors de la fluoration est éliminée par refroidissement du gaz de traitement.

2. Procédé selon la revendication 1,
caractérisé en ce que,
le gaz de traitement contenant du fluor entre dans le corps creux avec une température comprise entre -20°C et -196°C.

3. Procédé selon la revendication 1,
caractérisé en ce que,
on réalise le refroidissement du gaz de traitement par mélange avec de l'azote très froid introduit au préalable dans le corps creux.
